Europäisches Patentamt

European Patent Office

Office européen des brevets

(11) Publication number: **0 292 651 B1**

(12) EUROPEAN PATENT SPECIFICATION

(45) Date of publication of patent specification: **11.11.92**  (51) Int. Cl.⁵: **B23B 29/12**, B23B 31/38

(21) Application number: **88103401.1**

(22) Date of filing: **04.03.88**

(54) Vibrating cutting tool.

(30) Priority: **28.05.87 JP 135658/87**

(43) Date of publication of application:
**30.11.88 Bulletin 88/48**

(45) Publication of the grant of the patent:
**11.11.92 Bulletin 92/46**

(84) Designated Contracting States:
**CH DE ES FR GB IT LI NL SE**

(56) References cited:
**WO-A-81/03635          DE-A- 1 752 741**
**DE-A- 2 016 787        DE-A- 3 328 886**
**US-A- 1 334 898        US-A- 3 056 320**

**SANDVIK COROMANT BULLETIN February
1965, pages 430.2-008-430.2-011**

(73) Proprietor: **NIPPON PNEUMATIC MANUFAC-
TURING CO. LTD.
11-5 Kamiji 4-chome Higashinari-ku
Osaka(JP)**

(72) Inventor: **Hiraoka, Masaaki**
c/o Nippon Pneumatic Manufacturing Co.
Ltd.
**11-5, Kamiji 4-cho. Higashinari-ku Osaka(JP)**
Inventor: **Umemura, Yasuo**

c/o Nippon Pneumatic Manufacturing Co.
Ltd.
**11-5, Kamiji 4-cho. Higashinari-ku Osaka(JP)**
Inventor: **Date, Osamu**
c/o Nippon Pneumatic Manufacturing Co.
Ltd.
**11-5, Kamiji 4-cho. Higashinari-ku Osaka(JP)**
Inventor: **Aoki, Tsutomu**
c/o Nippon Pneumatic Manufacturing Co.
Ltd.
**11-5, Kamiji 4-cho. Higashinari-ku Osaka(JP)**
Inventor: **Wakano, Fukuo**
c/o Nippon Pneumatic Manufacturing Co.
Ltd.
**11-5, Kamiji 4-cho. Higashinari-ku Osaka(JP)**
Inventor: **Nakai, Hitomi**
c/o Nippon Pneumatic Manufacturing Co.
Ltd.
**11-5, Kamiji 4-cho. Higashinari-ku Osaka(JP)**

(74) Representative: **Glawe, Delfs, Moll & Partner
Patentanwälte
Postfach 26 01 62 Liebherrstrasse 20
W-8000 München 26(DE)**

## Description

The present invention relates to a vibrating cutting tool adapted to machine a work taking advantage of self-induced vibration produced during cutting.

Machining tools for machining a work with a cutter includes a lathe, drilling machine, boring machine, milling machine, grinding machine, planing machine, shaping machine, and so on. It is known that imparting suitable vibrations to the cutter during cutting helps to achieve higher cutting speed, higher machining accuracy and longer cutter life. As vibration generators, electrostriction or magneto-striction type vibrators excited by an oscillartor have been used. Other types such as an electromagnetic type, electro-hydraulic type and mechanical-hydraulic type are also known. Such conventional means for vibrating a cutter need complicated electrical circuits or a large-sized, complicated and costly device such as a hydraulic cylinder.

Cutting tools having active oscillators of this type have been known from DE-A-33 28 886 and US-A-3 056 320.

A cutter of the rotational type as defined in the preamble of claim 1, has been known from US-A-1 334 898. In this prior art cutter the balls engage in spherical recesses of the cutter shaft, whereby in case of overload torque each ball will disengage from the spherical recess in a sudden snap action, thus providing a torque limiting function. Another function of the balls is to allow for lateral self-alignment of the cutter shaft. However, the balls will not yield to microscopically small rotational vibrations of the cutter shaft as long as the torque does not exceed the limit torque. In a similar cutter known from DE-B-18 10 223 balls engaging with flat tangential surfaces of a cutter shaft are held between conical thrust rings, one of the thrust rings being axially movable against the force of a spring. In case of overload torque the balls will simultaneously yield in the radial direction while compressing the axial spring. Owing to engagement of all balls between conical thrust rings, each ball is not capable of individual vibration.

It is an object of the invention to provide a vibrating cutting tool which is simple in construction and which is capable of imparting vibration to the cutter during cutting for improving the cutting action, without requiring an actively energized vibration generator. In solving the object the invention utilizes the phenomenon of making a freely vibratable vibrator body vibrate in response to microscopical small vibrations of the cutter and re-transmit these vibrations onto the cutter.

The cutters according to the invention ulilizing this principle are defined in claims 1 and 2.

The cutting tool according to claim 1 can be a drill, milling cutter, end mill or grinding stone used with a drilling machine, boring machine, milling machine, grinding machine, planing machine, etc.

The cutting tool according to claim 2 can be used with a lathe on which a work is rotatably mounted, a planing machine on which the work is mounted to reciprocate with respect to the cutter, and a shaping machine on which the cutter is mounted to reciprocate with respect to the work.

According to the present invention, vibrations with a small amplitude generated at the edge of the cutter during cutting are carried to the vibrators where the vibrations are amplified. The amplified vibrations are then carried back to the cutter edge, thus improving the cutting ability of the cutter.

In a cutting tool according to claim 1, the input shaft which rotates with the cutter holder is fixed to the live spindle of a machine tool. The input shaft is pushed forward while being rotated by the live spindle to press the cutter fixed to the tool mounting shaft against the work to be machined.

The edge of the cutter vibrates with small amplitudes during cutting. The micro-vibrations at the cutter edge are propagated to the vibrator through the output shaft. When the vibrator hits the tapered surface formed on the output shaft, its vibration is amplified and transmitted back to the cutter edge, thus improving its cutting ability.

In a cutting tool according to claim 2, either the work is rotated or moved in a straight line to cause the cutter edge to cut into the work or the cutter is rotated or pushed forward to cause its edge to cut into the stationary work.

The vibration with small amplitude generated at the cutter during cutting is transmitted to the vibrator, causing the spring to vibrate as well. The vibration of the spring helps to amplify the vibration of the vibrator. The amplified vibration is transmitted back to the cutter when the vibrator hits it on the contact surface. Thus its cutting ability and cutting speed are improved. Also, this decreases the roughness of the finished surface and increases the dimensional accuracy.

If the cutter is overloaded due to wear at its edge, the coupling means having a torque limiter function will actuate, preventing the breakage of cutter and abnormal cutting. Also, it is possible according to claims 3 and 4, to provide means for detecting any abnormal state such as wear of cutter edge by sensing a change in air pressure resulting from the pivoting or other movement of the cutter.

Other features and objects of the present invention will become apparent from the following description taken with reference to the accompanying drawings, in which:

Figs. 1 to 3 are partial vertical sectional side views of the first embodiment of the cutting tool according to the present invention;

Fig. 4 is a cross-sectional view taken on line IV-IV of Fig. 1;

Fig. 5 is a similar view taken on line V-V of Fig. 2;

Fig. 6 is a similar view taken on line VI-VI of Fig. 3;

Fig. 7 is a vertical sectional side view of a second embodiment;

Fig. 8 is a similar view of a third embodiment;

Fig. 9 is a side view of a fourth embodiment;

Fig. 10 is a front view of the same;

Fig. 11 is a plan view of the same;

Fig. 12 is a side view of a fifth embodiment; and

Fig. 13 is a vertical sectional front view of the same.

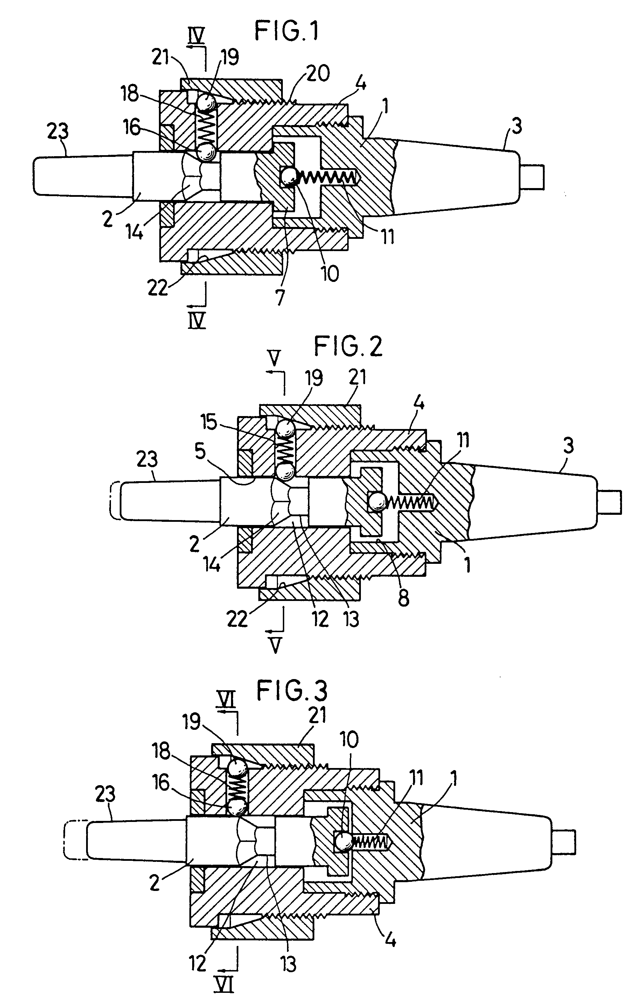

Now referring to Figs. 1 to 6 which shows the first embodiment of the present invention, numerals 1 and 2 designate an input shaft and an output shaft, respectively. The input shaft is formed with a tapered shank 3 at its rear part. A cylindrical cutter holder 4 is fixed to the front portion of the input shaft 1 by threaded engagement.

The output shaft 2 has its rear part rotatably and reciprocably received in a small-diameter bore 5 in the front part of the cutter holder 4 with its large-diameter rear end 7 housed loosely in a large-diameter bore 8 formed in the rear part of the cutter holder.

The output shaft 2 is formed in its rear end face at the center with a recess to receive a vibrator 10 biased forwardly by a spring 11 mounted in a center hole formed in the front end face of the input shaft 1.

The output shaft 2 is also formed at a portion received in the holder 4 with an annular groove 12 having its bottom 13 shaped with a small-diameter cylindrical periphery coaxial with the output shaft 2. The annular groove 12 has its rear side wall flat and rising at a right angle with respect to the axis of the output shaft and has its front side wall formed with a tapered polygonal surface 14.

The holder 4 is formed in its front part with a plurality of radial holes 15. At the inner end of each radial hole 15 is loosely mounted a vibrator ball 16 in contact with the output shaft 2. The vibrator 16 is biassed by a spring 18 having its rear end supported by a support member 19.

A torque adjusting sheath 21 is in threaded engagement with the holder 4 with a male thread 20 formed on the outer periphery of the holder 4 so as to be movable back and forth with respect to the holder by turning it. The adjusting sheath 21 has its inner periphery 22 tapered front-wide to support the support members 19 thereon.

In operation, the input shaft 1 is fixed at its tapered shank 3 to a spindle of a machine tool. A cutter (not shown) such as a drill is fixedly mounted on a mounting portion 23 at the head of the output shaft 2. The cutter cuts into a work as the spindle advances while rotating.

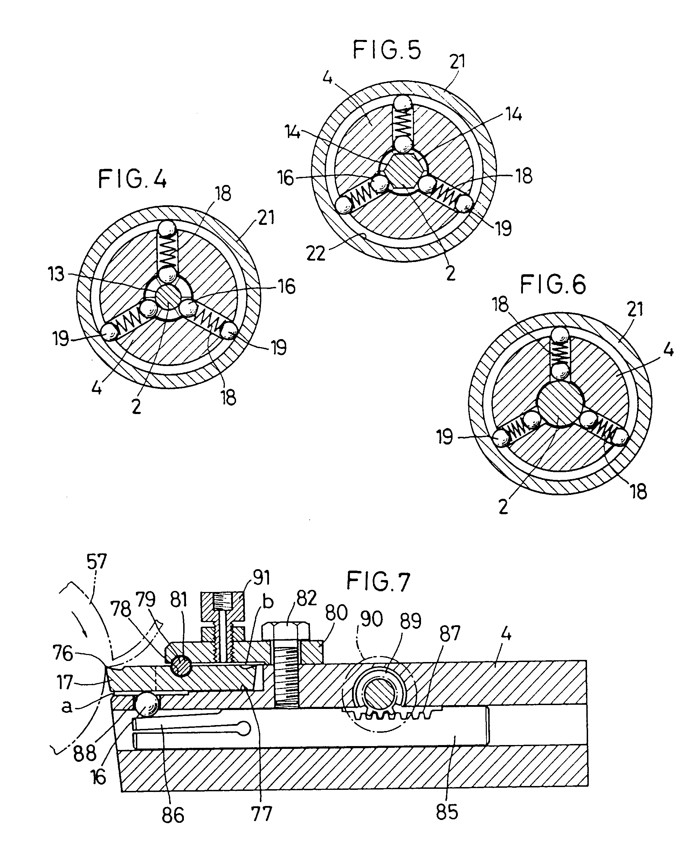

When the cutting tool is at a position shown in Figs. 1 and 4 (where the cutter is not in contact with the work), the vibrators 16 are in contact with the bottom 13 of the annular groove 12, so that the torque of the input shaft 1 will not be transmitted to the output shaft 2.

When the input shaft 1 further moves forward until the cutter abuts the work, the spring 11 will be compressed and the vibrators 16 will ride on the tapered surface 14 as shown in Figs. 2 and 5. The input shaft 1 thus engages the output shaft 2, transmitting its torque to the latter to start cutting the work.

The cutter vibrates with an extremely small amplitude at its edge while cutting into the work. The vibrations at the cutter edge are propagated to the output shaft 2. Thus, the vibrators 10 and 16 in contact with the output shaft vibrate in the axial and radial directions, causing them to be knocked against the bottom of the rear end of the output shaft and the tapered surface 14, respectively. The vibrations of the vibrators are transmitted back to the cutter edge. Thus, its cutting ability improves.

If during cutting the output shaft 2 should be subjected to an abnormal torque for some reason, the springs 18 would be compressed to allow the vibrators 16 to ride over the tapered surface 14 onto the outer periphery of the output shaft 2, disengaging the output shaft 2 from the input shaft 1. Thus, the torque of the input shaft 1 is not transmitted to the cutting tool, preventing the cutter from being destroyed.

Also, if the feed of the input shaft is too high compared with the cutting speed by the cutter, the output shaft 2 will retract into the cutter holder 4, until the vibrators 16 ride onto the outer periphery of the outupt shaft 2 as shown in Figs. 3 and 6. Thus, the output shaft gets freed from the torque as well as the axial movement of the input shaft, preventing the cutter from breaking. It will be now understood that the arrangement of the present invention acts as a torque limiter, too.

The torque adjusting sheath 21 is adapted to be moved back and forth by turning it to adjust the pressure exerted on the springs 18 through the tapered surface 22 and the support members 19. Thus, the torque transmitted to the output shaft is adjustable.

If the cutter is a general purpose drill, it is necessary to impart vibrations in the direction of its axis as well as in the direction of rotation. If the cutter is for machining a soft material, it is only necessary to give axial vibrations. In case of an end mill, the cutter has to be vibrated only in the direction of rotation.

Accordingly, it is preferable to provide a suitable means for disabling either the vibrators which tend to vibrate axially or the ones which tends to vibrate in the direction of rotation, as necessary.

In the first embodiment, the machine tool is stopped after it has been confirmed visually that the cutter has stopped.

If the cutting tool is provided with an abnormal torque detector, it should be adapted to signal a warning and cause the machine tool to stop upon detecting any abnormal torque.

In the second embodiment shown in Fig. 7, the cutter holder 4 has a square section so as to be fixed to a tool post of a lathe (not shown) and is formed in its front top surface with a cutout 77 on which is mounted a cutter 17.

The cutter 17 is formed in its top surface with a groove 78 having a semicircular section and laterally extending across its central part. A pin 79 is rotatably received in the groove 78. A brace 80 has its rear portion fixed to the holder 4 by means of a bolt 82. The upper half of the pin 79 is received in a groove 81 of a semicircular section formed in the front bottom surface of the brace 80.

There are formed gaps a and b between the bottom surface on the cutter 17 and the top of the holder 4 at its front end and between the top surface on the cutter 17 and the bottom surface of the brace 80, respectively. The gaps a and b permit the vertical pivotal movement of the cutter 17 about the pin 79. But the cutter is free from play both in longitudinal and transverse directions because of snug fit of the pin 79 in the grooves 78 and 81 and the abutment with the sides of the cutout 77.

The holder 4 is formed with a longitudinal bore in which is mounted a longitudinally slidable spring member 85 formed in its front end with a slit of a predetermined depth. Its portion over the slit serves as a spring 86. The spring member 85 is also formed with a rack gear 87 on its rear top surface.

The holder 4 is formed adjacent its front end with a vertical hole 88 in which a vibrator 16 such as a steel ball is loosely mounted so as to be vertically slidable. The vibrator 16 has its top and bottom in contact with the cutter 17 and the spring 86, respectively. When the spring 86 rebounds upwardly, it pushes up the front part of the cutter 17 through the vibrator 16. Thus, the cutter is caused to pivot about the pin 79 in such a manner that its edge 76 will cut into a work which is rotating in the direction of arrow in Fig. 7.

A pinion gear 89 mounted in a transverse hole formed in the holder 4 is in meshing engagement with the rack gear 87. A knob 90 is mounted on the shaft of the pinion gear 89 at one end thereof. By turning the knob 90, the pinion gear 89 rotates, causing the spring member 85 to slide back and forth. The bias of the spring 86 can be thus adjusted.

Numeral 91 designates an air nozzle screwed into a tapped hole formed in the intermediate portion of the brace 80.

In operation, the work 57 is rotated in the direction of arrow of Fig. 7. When the cutter 17 cuts into the work with its edge 76, it will be pushed down to pivot on the pin 79. Pushed down by the cutter 17, the spring 86 rebounds to push the cutter on the front bottom surface through the vibrator 16, causing the cutter edge 76 to be pushed back upwardly.

During the cutting operation, the cutter edge 76 is vibrated with an extremely small amplitude. The micro-vibration at the edge travels to the vibrator 16 where it is amplified by the repulsive force of the spring 86 and is transmitted back to the cutter edge 76.

In this embodiment, the air nozzle 91 communicates with an airway leading to a source of pressurized air. A pressure detector means such as a pressure switch for detecting the fluctuation of air pressure is provided in the airway. The pressurized air is being blown out of the nozzle 91 into the gap b during cutting.

The pressurized air blown into the gap b can escape through both sides of the gap into the atmosphere as long as no abnormal state is encountered. The air pressure in the airway is also kept normal. But if the cutter 17 should be overloaded for some reason such as wear at the edge 76, it will pivot downwardly against the bias of the spring 86, thus narrowing the gap b. The air pressure in the airway thus rises, so that the pressure detector will operate to stop the cutting tool or to send out a warning.

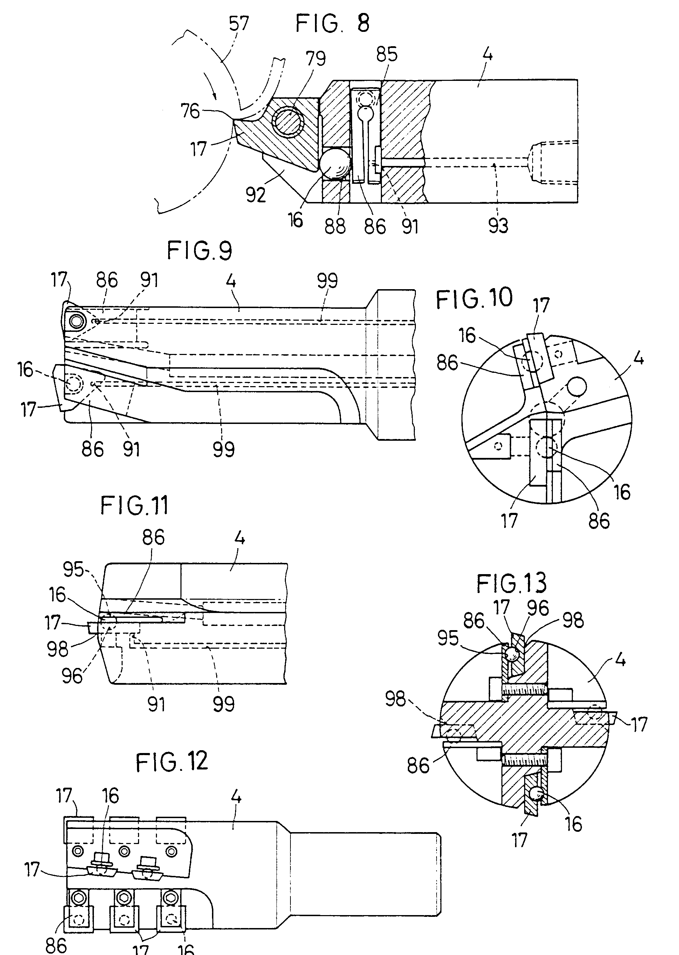

Fig. 8 shows the third embodiment in which the cutter holder 4 is integrally provided on its front end with a cutter support 92. The cutter 17 is pivotally mounted on a pin 79 received in a transversely hole formed in the support 92.

The holder 4 is formed with a vertical hole near its front end at a position behind the cutter 17. A spring member 85 is inserted in the vertical hole and has its top end portion fixed by means of a setscrew at an adjustable vertical position.

The spring member 85 is formed in its bottom end with a longitudinal slot. The portion of the spring member 85 at the front side of the slot acts as a spring 86. The holder 4 is also formed with a hole in its front end in which is loosely mounted a vibrator 16 such as a steel ball having its front and rear ends in contact with the lower end of the back of the cutter 17 and the spring 86, respectively.

The resilience of the spring 86 is adjustable by loosening the setscrew and moving the spring member 85 up and down.

An airway 93 extends in the holder 4 from its rear end to the vertical hole having the spring member 85 received therein. The airway 93 further communicates with the vertical slot formed in the spring member 85 through an air nozzle 91 formed in the rear half of the spring member 85 at its lower part.

In operation of the third embodiment, too, the work 57 is cut by causing the edge 76 of the cutter 17 to bite into it while rotating in the direction of arrow of Fig. 13. During cutting, the micro-vibration of the edge 76 is transmitted to the vibrator 16 where it is amplified by the rebounding movement of the spring 86 and is transmitted back to the edge 76.

If the cutter should be overloaded, the spring member 85 is compressed so as to narrow its slot, thus actuating the pressure detector.

Figs. 9 to 11 show the fourth embodiment which is a drill type tool for use with a drilling machine or the like. A holder 4 in the shape of a round bar is fixed to a live spindle of a drilling machine. A plurality of inserts or cutters 17 are mounted on its head. The holder 4 is formed in its front end face at both sides with grooves. A recess is formed in one of the side walls of each groove at the front end thereof so as to movably receive each cutter 17 therein.

Each cutter 17 is formed in one side thereof with a semi-spherical dent 96. In each groove is mounted a spring 86 having its rear end fixed and formed in its front portion at one side with a semi-spherical dent 95 so as to be opposed to the dent 96. A vibrator 16 such as a steel ball is received in each opposed pair of dents 96 and 95. The cutter 17 is urged by the spring 86 against the bottom of the recess formed in the holder 4 so as to be pivotable about the front edge 98 of the recess against the bias of the spring 86.

The holder 4 is formed with a plurality of airways 99 communicating with air nozzles 91 in the recesses. The air nozzles are normally closed by the cutters 17.

In operation, a work is fixed on the table of a drilling machine. While rotating the holder 4, the cutters are caused to bite into the work. One of the cutters 17 cuts into the work and the bottom of a hole while the other one serves to cut the inner periphery of the hole formed by the leading cutter.

During cutting, micro-vibrations at the edge of the cutters are transmitted to the vibrators 16 and amplified by the rebounding movement of the springs 86. The amplified vibrations are then carried back to the cutter edges.

In this embodiment, a pressure detector is provided halfway in a circuit connecting each airway 99 to a source of pressurized air. The nozzles 91 are normally kept under air pressure during cutting. If the cutters are put under overloaded conditions, they will move to widen the gaps between the cutters and the bottom of the recesses, causing the pressurized air to be exhausted, thus actuating the pressure detectors.

The fifth embodiment shown in Figs. 12 and 13 is applicable to an end mill type tool for use with a milling machine.

A round bar-shaped holder 4 is fixed to a live spindle of a milling machine. The holder 4 is formed in its periphery with a plurality of longitudinal grooves extending from its front end. Each groove is formed with a plurality of recesses in one of its side walls so as to movably mount cutters 17 provided with vibrators.

Though not shown in the drawings, the cutting tool of this embodiment may be provided with means for detecting the abnormal state of the cutting tools by detecting the fluctuation of air pressure as with the other embodiments.

By way of description, we assumed that the holder is rotatable with the spindle except for the fourth and fifth embodiments. But, the work may be rotatably mounted with the holder fixed.

**Claims**

1. A cutting tool comprising a rotatably driven cutter holder (1), a cutter having a shaft (2) rotatably received in a central bore (5) of said cutter holder (1), and means for providing a torque transmitting overload coupling between the shaft (2) and cutter holder (1), said means comprising a plurality of balls (16) each being losely mounted in a radial hole (15) of said cutter holder (1) together with a spring (18) urging the ball (16) against a recess in the periphery of said shaft (2), **characterized** in that each of said balls (16) engages a flat tangential surface (14) of said shaft (2), whereby each of said balls (16) together with its spring (18) forms a vibrator which vibrates in the radial direction in response to microscopic rotational vibrations of the cutter shaft (2) and re-transmits its vibrations onto the shaft (2).

2. A cutting tool comprising a holder (4), at least one cutter (17) mounted in a recess of said holder (4) and having a cutting edge (76) facing in a cutting direction, and securing means (79, 80, 82) for securing said cutter (17) in said recess of the holder (4), **characterized** in that said recess and said securing means are formed for allowing freedom of limited pivotal movement of the cutter (17) relative to the holder (4) about an axis (79, 98) substantially parallel to said cutting edge (76)

and that a vibrator body (16) is losely mounted in said holder and urged by a spring (86) against said cutter (17) so as to resiliently resist said pivotal movement of the cutter (17), whereby said vibrator body (16) vibrates in response to microscopic pivotal vibrations of the edge of said cutter (17) and re-transmits its vibrations onto the cutter (17).

3. A cutting tool as claimed in claim 1, further comprising an air pressure detector means for detecting the overload state of said overload coupling means through a change of air pressure.

4. A cutting tool as claimed in claim 3, further comprising a detector means for detecting abnormal increase of the amplitude of the vibrations of said cutter beyond a predetermined limit as a change of air pressure.

**Patentansprüche**

1. Spanabhebendes Werkzeug mit einem drehbar angetriebenen Werkzeughalter (1), einem Schneidewerkzeug mit einem Schaft (2), der drehbar in einer zentralen Aufnahme (5) des Werkzeughalters (1) aufgenommen ist, und Mitteln zur Herstellung einer Drehmoment-übertragenden Überlastkupplung zwischen dem Schaft (2) und dem Werkzeughalter (1), die eine Anzahl Kugeln (16) aufweisen, von denen jede lose in einer radialen Bohrung (15) des Werkzeughalters (1) zusammen mit einer Feder (18) gelagert ist, die die Kugel (16) gegen eine Ausnehmung am Umfang des Schaftes (2) drückt,
dadurch **gekennzeichnet,** daß jede der Kugeln (16) gegen eine ebene tangentiale Fläche (14) des Schaftes (2) anliegt, wobei jede der Kugeln (16) zusammen mit ihrer Feder (18) einen Vibrator bildet, der aufgrund mikroskopischer Drehvibrationen des Werkzeugschaftes (2) in Radialrichtung vibriert und seine Vibrationen auf den Schaft zurücküberträgt.

2. Spanabhebendes Werkzeug mit einem Kalter (4), mindestens einem Schneidewerkzeug (17), das in einer Ausnehmung des Halters (4) gelagert ist und eine in eine Schneiderichtung weisende Schneidkante (76) aufweist, und Befestigungsmittel (79, 80, 82) zum Befestigen des Schneidewerkzeugs (17) in der Ausnehmung des Halters (4),
dadurch **gekennzeichnet,** daß die Ausnehmung und die Befestigungsmittel so geformt sind, daß sie begrenzte Schwenkbewegungen des Schneidewerkzeugs (17) relativ zu dem Kalter (4) um eine zur Schneidkante (76) im wesentlichen parallele Achse gestatten,
und daß ein Vibrationskörper (16) in dem Halter lose gelagert ist und durch eine Feder (86) gegen das Schneidewerkzeug gedrückt wird, um der Schwenkbewegung des Schneidewerkzeugs nachgiebig Widerstand zu leisten, wobei der Vibrationskorper aufgrund mikroskopischer Schwenkvibrationen der Kante des Schneidewerkzeugs (17) vibriert und seine Vibrationen auf das Schneidewerkzeug zurücküberträgt.

3. Spanabhebendes Werkzeug nach Anspruch 1, das weiterhin eine Luftdruckdetektoreinrichtung aufweist, die den Überlastzustand der Überlastkupplung aufgrund einer Änderung des Luftdrucks detektiert.

4. Spanabhebendes Werkzeug nach Anspruch 3, das weiterhin eine Detektoreinrichtung aufweist, die eine abnormale Zunahme der Amplitude der Vibrationen des Schneidewerkzeugs, über eine vorgesehene Grenze hinaus, anhand einer Änderung des Luftdrucks detektiert.

**Revendications**

1. Outil de coupe comprenant un support de couteau entraîné en rotation (1), un couteau ayant un axe (2) reçu en rotation dans un alésage central (5) dudit support de couteau (1), et des moyens pour former un accouplement limiteur de couple entre l'axe (2) et le support de couteau (1), lesdits moyens comprenant une pluralité de billes (16) dont chacune est montée librement dans un trou radial (15) dudit support de couteau (1) avec un ressort (18) poussant la bille (16) contre une cavité formée dans la périphérie dudit axe (2), caractérisé en ce que chacune desdites billes (16) est en contact avec une surface plane tangentielle (14) dudit axe (2), moyennant quoi chacune desdites billes (16) avec son ressort (18) forme un vibrateur qui vibre en direction radiale en réponse à des vibrations de rotation microscopiques de l'axe du couteau (2) et retransmet ces vibrations sur l'axe (2).

2. Outil de coupe comprenant un support (4), au moins un couteau (17) monté dans une cavité dudit support (4) et présentant un bord de coupe (76) orienté dans la direction de coupe, et des moyens de fixation (79, 80, 82) pour fixer ledit couteau (17) dans ladite cavité du support (4), caractérisé en ce que ladite cavité et lesdits moyens de fixation sont agencés pour autoriser une liberté de mouvement de rotation limité du couteau (17) par rapport au support (4) autour d'un axe (79, 98) sensiblement parallèle audit bord de coupe (76),

et en ce que un corps de vibrateur (16) est monté librement dans ledit support et est poussé par un ressort (86) contre ledit couteau (17) de façon à résister élastiquement audit mouvement de pivotement du couteau (17) moyennant quoi ledit corps de vibrateur (16) vibre en réponse à des vibrations de pivotement microscopiques du bord dudit couteau (17) et retransmet ses vibrations sur le couteau (17).

3. Outil de coupe selon la revendication 1, comprenant en outre un dispositif de détection de pression d'air pour détecter l'état de surcharge dudit dispositif d'accouplement limiteur de couple au moyen d'un changement dans la pression de l'air.

4. Outil de coupe selon la revendication 3, comprenant en outre un dispositif de détection pour détecter un accroissement anormal de l'amplitude des vibrations dudit couteau au-delà d'une limite prédéterminée sous forme d'un changement de pression d'air.

FIG.1

FIG.2

FIG.3

FIG.4

FIG.5

FIG.6

FIG.7

FIG. 8

FIG.9

FIG.10

FIG.11

FIG.13

FIG.12

10